# EUROPÄISCHE PATENTSCHRIFT

(11) **EP 0 444 064 B1**
(45) Veröffentlichungstag und Bekanntmachung des Hinweises auf die Patenterteilung: **24.02.1993**
(21) Anmeldenummer: 89912402.8
(22) Anmeldetag: 16.11.1989
(51) Int. Cl.: F16K 11/074

(54) **SANITÄRES WASSERVENTIL MIT BETÄTIGUNGSMECHANIK**
TAP WITH ACTUATING MECHANISM
ROBINET D'EAU SANITAIRE A MECANISME D'ACTIONNEMENT

(30) Priorität: 16.11.1988 DE 3838765
(43) Veröffentlichungstag der Anmeldung: 04.09.1991
(73) Patentinhaber: IDEAL-STANDARD GMBH, D-53008 Bonn (DE)
(72) Erfinder: BERGMANN, Konrad, D-5560 Wittlich (DE)
(74) Vertreter: Müller, Karl-Ernst, Dr., Dipl.-Ing.
(86) Internationale Anmeldenummer: DE8900719
(87) Internationale Veröffentlichungsnummer: WO9005868

(56) Entgegenhaltungen:
- DE-A- 3 419 208
- DE-A- 3 525 053
- US-A- 3 372 710
- US-A- 3 533 444

## Beschreibung

Die Erfindung betrifft ein sanitäres Wasserventil mit einem aus drei übereinander liegenden Steuerscheiben bestehenden und von einem Gehäuse umschlossenen Steuerelement, wobei die untere und die obere Steuerscheibe feststehen und die mittlere Steuerscheibe über ein an ihr angreifendes Betätigungsorgan relativ zu den festen Steuerscheiben verschiebbar ist, wobei das in zwei Ebenen im Gehäuse kipp- bzw. schwenkbar angeordnete Betätigungsorgan den Gehäusedeckel und die obere feste Steuerscheibe durchgreift.

Ein Wasserventil mit den gattungsgemäßen Merkmalen ist in der DE-OS 35 25 053.4 beschrieben; dieses Wasserventil weist als Besonderheit ein aus drei Scheiben bestehendes Steuerelement auf, dessen mittlere Scheibe als bewegliche Steuerscheibe gegenüber den beiden äußeren festen Steuerscheiben relativ verschiebbar ist. Die Verschiebung der mittleren Steuerscheibeund damit die Regelung des Wasserstromes wird vorgenommen über ein Betätigungsorgan, das in die mittlere Steuerscheibe eingreift und mit dieser verbunden ist und dazu sowohl den Deckel des das Steuerelement umschließenden Gehäuses als auch die obere feststehende Steuerscheibe in jeweils einer entsprechend angeordneten Durchbrechung durchgreift. Bei dem bekannten Wasserventil ist das Betätigungsorgan mittels einer an ihm ausgebildeten und in der Durchbrechung der oberen feststehenden Steuerscheibe liegenden kugelförmigen Erweiterung gelagert.

Hiermit ist der Nachteil verbunden, daß aufgrund der beengten Abmessungen der oberen feststehenden Steuerscheibe nur ein sehr kleiner Radius für die von der oberen Steuerscheibe aufzunehmende Lagerkugel ausgebildet werden kann. Die damit verbundenen engen Fertigungstoleranzen sind aber in einer Serienfertigung größerer Stückzahlen von Wasserventilen kaum einzuhalten, und zusätzlich sind die bei kleinem Kugelradius zur Verfügung stehenden Lagerflächen für das Betätigungsorgan in der oberen Scheibe so knapp bemessen, daß sich kaum eine ausreichende Stabilität der Lagerung des Betätigungsorgans in der oberen Scheibe sowie der Führung der mittleren beweglichen Scheibe über das Betätigungsorgan ergibt.

Im Hinblick auf die Vermeidung derartiger Nachteile ist es beispielsweise aus der DE-OS 34 19 208 bekannt, bei einem zwei Scheiben umfassenden Ventil, bei welchem das Betätigungsorgan an der oberen beweglichen Scheibe angreift, das Betätigungsorgan mit einer Lagerkugel vergleichsweise großen Durchmessers in dem entsprechend stark ausgebildeten Deckelteil des Gehäuses zu lagern. Eine derartige Lösung ist aber auf ein gattungsgemäßes Wasserventil nicht anwendbar, weil aufgrund der zusätzlichen dritten Steuerscheibe und bei einer entsprechend dicken Ausbildung des Gehäusedeckels zur Aufnahme einer Lagerkugel größeren Durchmessers die Bauhöhe des Ventils insgesamt das zuträgliche Maß übersteigen würde.

Der Erfindung liegt daher die Aufgabe zugrunde, ein Wasserventil mit den gattungsgemäßen Merkmalen so zu verbessern, daß seine Bauhöhe bei einer gleichzeitig einfach zu fertigenden und in ihrer Funktion wirkungsvollen Lagerung des Betätigungsorgans begrenzt ist.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Die Erfindung geht von dem Grundgedanken aus, daß das Betätigungsorgan an außerhalb des das Steuerelement umschließenden Gehäuses angeordneten Lagerstellen derart gelagert ist, daß der Drehpunkt des Betätigungsorgans in der Ebene des Gehäusedeckels liegt. Hiermit ist der wesentliche Vorteil verbunden, daß einerseits der Deckel des das Steuerelement umschließenden Gehäuses vergleichsweise dünn gehalten werden kann, weil er keine Lagerfunktion, sondern nur eine Durchtrittsfunktion für das Betätigungsorgan zu erfüllen hat; andererseits ergibt sich aber in vorteilhafter Weise ein kurz bemessener Abstand zwischen dem in der Ebene des Gehäusedeckels angeordneten Drehpunkt des Betätigungsorgans und dessen Verbindung mit der beweglichen Scheibe, was zur Folge hat, daß aufgrund des so gebildeten kurzen Hebelarms zwischen Drehpunkt und Angriffspunkt an der mittleren Scheibe und des längeren Hebelaarms zwischen Drehpunkt und der am oberen Ende des Betätigungsorgans ausgebildeten Handhabe eine größere Schwenkbewegung des Handhebels nur zu einer vergleichsweise geringen Verschiebung der beweglichen Scheibe führt, so daß eine Feineinstellung der Wasserwege möglich ist. Dieser Gesichtspunkt ist bei dem gattungsgemäßen Ventil deshalb von großer Bedeutung, weil aufgrund der in zwei Ebenen möglichen Wasseraustritte der Wasserdurchfluß durch das Ventil sehr viel größer ist als bei einem Zwei-Scheiben-Ventil, so daß bereits geringfügige Verschiebungen der beweglichen Steuerscherbe vergleichsweise große Auswirkungen auf die insgesamt das Ventil durchströmende Wassermenge haben.

Nach einem bevorzugten Ausführungsbeispiel ist vorgesehen, daß sich auf dem Gehäusedeckel erhebend kugelabschnittförmige Lagerstellen angeordnet sind, die von einer mit dem Betätigungsorgan verbundenen Hülse formschlüssig derart umgriffen werden, daß sich eine Lagerung des Betätigungsorgans über die an ihm ausgebildete Hülse im Zusammenwirken mit den auf dem Gehäusedeckel angeordneten Lagerstellen ergibt. Nach einem Ausführungsbeispiel der Erfindung sind diese Lagerstellen als ein halbzylindrischer Körper ausgebildet, welcher mit seiner Schnittfläche senkrecht zur Schwenkebene des Betätigungsorgans auf den Deckel des Gehäuses gelegt ist und eine Öffnung zum Durchtritt des Betätigungsorgans aufweist; hierzu passend weist die Hülse den Halbzylinder übergreifende Ansätze auf, so daß hier eine Gleitlagerung auf einem Zylinderabschnitt verwirklicht ist.

Nach einem Ausführungsbeispiel der Erfindung weist das Betätigungsorgan in der Ebene des Gehäusedeckels eine die Durchtrittsöffnung durch den Gehäusedeckel ausfüllende kugelartige Verdickung auf, die eine zusätzliche Führung und Sicherung des Betätigungsorgans gegen Zugbelastung bildet; diese kugelförmige Verdickung weist aber keine Lagerfunktion für das Betätigungsorgan auf.

Nach der Erfindung kann ferner vorgesehen sein, das Betätigungsorgan mit Hülse durch ein am Gehäuse festzulegendes Halteteil zu sichern, so daß das Betätigungsorgan mit Hülse bezüglich der Lagerstellen fixiert ist.

In der Zeichnung sind zwei Ausführungsbeispiele der Erfindung wiedergegeben, welche nachstehend beschrieben sind. Es zeigen:

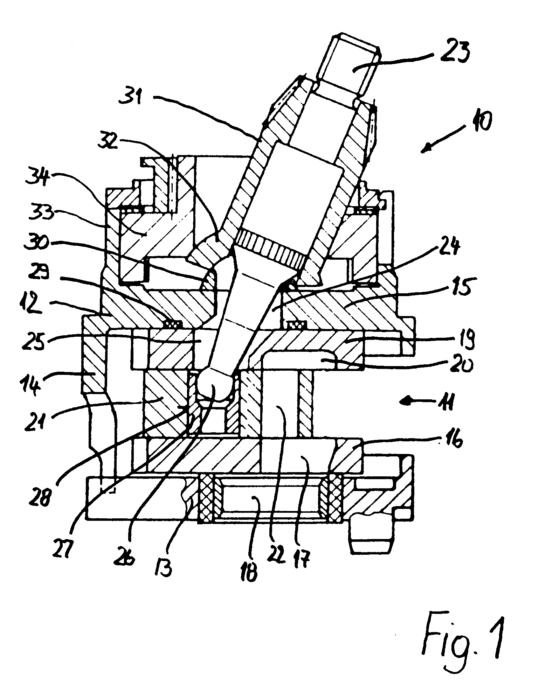

Fig. 1 ein sanitäres Wasserventil im Schnitt,
Fig. 2 ein anderes Ausführungsbeispiel des Wasserventils gemäß Figur 1.

Das Wasserventil 10 weist als Steuerelement 11 ein aus drei einzelnen Scheiben bestehendes Scheibenpaket auf, welches von einem Gehäuse 12 mit einem Boden 13, einer Seitenwandung 14 und einem Deckel 15 umschlossen ist. Die untere Scheibe 16 des Steuerelementes 11 ist gegen den Gehäuseboden 12 festgelegt und weist Öffnungen 17 zum Durchtritt des kalten und warmen Wassers auf, welches über entsprechend zugeordnete Durchtrittsöffnungen 18 in dem Gehäuseboden 13 in das Ventil einströmt; in den Figuren ist jeweils nur eine Öffnung 17, 18 erkennbar.

Gegen den oberen Gehäusedeckel 15 festgelegt ist die obere Scheibe 19 des Steuerelementes 11, welche den Öffnungen 17, 18 zugeordnete Umlenkkammern 20 aufweist; zwischen den festen Scheiben 16, 19 ist die bewegliche Scheibe 21 mit entsprechend kommunizierenden Öffnungen 22 angeordnet, wie sich aus der Figurendarstellung ergibt. In den Figuren ist das Ventil jeweils in der Offenstellung eingezeichnet, bei welchem der rechte Rand der beweglichen Scheibe gegenüber den zugeordneten Rändern der festen Scheiben 16, 19 verschoben ist, so daß das von unten her in das Wasserventil 10 einströmende Wasser über die Öffnungen 17 bzw. die Öffnung 22 und die Umlenkkammer 20 in den Wasserraum des Ventils strömen kann. Wird die bewegliche Scheibe 21 nach rechts verschoben, bis die Scheibenränder zur Deckung gelangen, ist die geschlossene Stellung des Wasserventils erreicht, in welcher die Umlenkkammern 20 ständig unter dem Druck des auf dem Ventil anstehenden Wassers stehen.

Zur Bewegung und Verschiebung der beweglichen Scheibe 21 ist ein Betätigungsorgan 23 vorgesehen, welches den Gehäusedeckel 15 in einer Öffnung 24 und die obere feste Scheibe 19 in einer zugeordneten Öffnung 25 durchgreift und mit einer kugelförmigen Führung 26 in die bewegliche Scheibe 21 eingreift, die zu diesem Zweck eine Bohrung 28 aufweist, in welche eine Hülse 27 zur Aufnahme der kugelförmigen Führung 26 des Betätigungsorgans 23 eingesetzt ist. Das Betätigungsorgan 23 ist im wesentlicher stabförmig ausgebildet mit einem geringeren Durchmesser im Bereich der Durchgriffsöffnungen 24, 25 in der festen oberen Scheibe 19 bzw. dem Gehäusedeckel 15 und mit einem größeren Durchmesser in dem außerhalb des Gehäuses 12 gelegenen Bereich. Die obere Scheibe 19 ist gegen die Unterseite des Gehäusedeckels 15 noch mittels einer die entsprechende Durchtrittsöffnung 25 umgebenden Dichtung 29 abgedichtet, so daß aus den Waasserraum des Ventils über die Trennfläche zwischen Steuerelement 11 und der Unterseite des Gehäusedeckels 15 kein Wasser über die Öffnung 24 aus dem Gehäuse 12 austreten kann.

Zur Lagerung des Betätigungsorgans 23 sind auf der Oberseite des Deckels 15 sich erhebend Lagerstellen 30 ausgebildet, die in ihrer Querschnittsdarstellung in den Figuren die Form von Kugelabschnitten aufweisen. In der senkrecht zu der aus der Schnittdarstellung sich ergebenden Bewegungsebene des Betätigungsorgans 23 einstellenden Ebene des Ventils handelt es sich dabei um einen Halbzylinder, der mit seiner Schnittfläche auf den Deckel 15 aufgelegt ist und eine Öffnung zum Durchtritt des Betätigungsorgans 23 aufweist.

Die sich domartig erhebenden Kugelabschnitte 30 werden übergriffen von Ansätzen 32 einer Hülse 31, die ihrerseits mit dem Betätigungselement 23 verbunden ist; die diesbezüglichen Ansätze 32 weisen hierbei eine auf die äußere Form der Lagerstellen 30 abgestimmte Oberfläche ihrer Innenseite auf.

Die Seitenwände 14 des Gehäuses 12 sind über den Deckel 15 hinaus nach oben verlängert, so daß sich ein das Betätigungsorgan 23 mit Hülse 31 umschließender napfförmiger Raum ergibt, in welchem ein Halteteil 34 über eine geeignete Verbindung festgelegt ist, welches seinerseits die Ansätze 32 der Hülse 31 übergreift und somit das Betätigungsorgan 23 mit Hülse 31 axial in dem Ventil 10 festlegt.

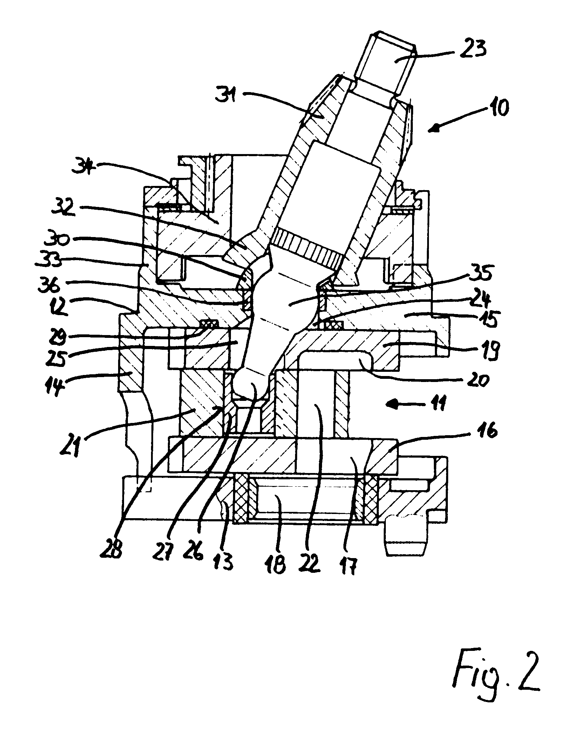

In Figur 2 ist ein Ausführungsbeispiel dargestellt, welches in seiner Darstellung dem zuvor beschriebenen Ausführungsbeispiel entspricht, jedoch weist bei dieser Ausführungsform das Betätigungsorgan 23 in der Ebene des Gehäusedeckels 15 eine die Durchtrittsöffnung 24 ausfüllende kugelartige Verdickung 35 auf, mittels welcher die Führung des Betätigungsorgans verbessert und eine zusätzliche Axialsicherung gegen eine axiale Verschiebung des Betätigungsorgans 23 bewirkt ist. Zusammenwirkend damit ist in die innere Wandung der Ausnehmung 24 eine zusätzliche, die kugelförmige Verdickung 35 des Betätigungsorgans 23 einschließende Dichtung 36 eingelegt.

## Patentansprüche

1. Sanitäres Wasserventil (10) mit einem aus drei übereinander liegenden Steuerscheiben (16, 21, 19) bestehenden und von einem Gehäuse (12) umschlossenen Steuerelement (11), wobei die untere (16) und die obere (19) Steuerscheibe feststehen und die mittlere Steuerscheibe (21) über ein an ihr angreifendes Betätigungsorgan (23) relativ zu den festen Steuerscheiben verschiebbar ist, wobei das in zwei Ebenen im Gehäuse (12) kipp- beziehungsweise schwenkbar gelagerte Betätigungsorgan (23) den Gehäusedeckel (15) und die obere feste Steuerscheibe (19) durchgreift, dadurch gekennzeichnet, daß das Betätigungsorgan (23) an außerhalb des das Steuerelement (11) umschließenden Gehäuses (12) angeordneten Lagerstellen (30) derart gelagert ist, daß der Drehpunkt des Betätigungsorgans (23) in der Ebene des Gehäusedeckels (15) liegt.

2. Wasserventil nach Anspruch 1, dadurch gekennzeichnet, daß die Lagerstellen (30) für das Betätigungsorgan (23) auf dem Gehäusedeckel (15) beiderseits der Schwenkebene des Betätigungsorgans (23) sich erhebend angeordnet sind.

3. Wasserventil nach Anspruch 1 oder 2, dadurch gekennzeichnet, daß die Lagerstellen (30) als domartig sich auf dem Gehäusedeckel (15) erhebende Kugelabschnitte (30) ausgebildet sind.

4. Wasserventil nach Anspruch 3, dadurch gekennzeichnet, daß als Lagerstelle ein senkrecht zur Schwenkebene des Betätigungsorgans (23) verlaufender und mit seiner Schnittfläche auf dem Gehäusedeckel (15) aufliegender Halbzylinder (30) angeordnet ist, der eine Öffnung zum Durchtritt des Betätigungsorgans (23) aufweist.

5. Wasserventil nach einem der Ansprüche 1 bis 4, dadurch gekennzeichnet, daß das Betätigungsorgan (23) von einer die Lagerstellen (30) umfassenden Hülse (31) umgeben und mit dieser verbunden ist.

6. Sanitäres Wasserventil nach Anspruch 5, dadurch gekennzeichnet, daß die Hülse (31) der Form der Lagerstellen (30) entsprechende und diese umgreifende Ansätze (32) aufweist.

7. Wasserventil nach einem der Ansprüche 1 bis 6, dadurch gekennzeichnet, daß das Betätigungsorgan (23) in der Ebene des Gehäusedeckels (15) eine die Durchtrittsöffnung (24) ausfüllende kugelartige Verdickung (35) aufweist.

8. Wasserventil nach einem der Ansprüche 1 bis 7, dadurch gekennzeichnet, daß in dem oberen napfförmigen Teil (33) des Gehäuses ein die Hülse (31) festlegendes Halteteil (34) angeordnet ist.

9. Wasserventil nach einem der Ansprüche 1 bis 7, dadurch gekennzeichnet, daß die obere feste Scheibe (19) über einen die Durchtrittsöffnung (25) für das Betätigungsorgan (23) umschließenden Dichtungsring (29) gegen den Gehäusedeckel (15) abgedichtet ist.

## Claims

1. Sanitary water valve (10) with a control member (11), which consists of three disk cams (16, 21, 19) situated above one another and which is enclosed by a casing (12), whereby the lower (16) and the upper (19) disk cam are stationery and the middle disk cam (21) is displaceable relative to the stationery disk cams by an actuator (23) that engages in it, whereby the actuator (23), which is arranged in two planes within the casing (12) to tilt and to swivel, respectively, passes through both the casing lid (15) and the upper stationery disk cam (19), characterized in that the actuator (23) is supported on bearings (30), which are arranged outside the casing (12) that encloses the control member (11), in such a manner that the fulcrum of the actuator (23) is situated in the plane of the casing lid (15).

2. Water valve according to claim 1, characterized in that the bearings (30) for the actuator (23) are arranged to rise on the casing lid (15) on both sides of the swiveling plane of the actuator (23).

3. Water valve according to one of claims 1 or 2, characterized in that the bearings (30) are arranged to rise on the casing lid (15) as dome-shaped spheroidal sections (30).

4. Water valve according to claim 3, characterized in that the bearing is formed by an semicylinder (30), which proceeds perpendicular to the swiveling plane of the actuator (23), whose intersecting plane rests on the casing lid (15), and which has an opening for the passage of the actuator (23).

5. Water valve according to one of claims 1 to 4, characterized in that the actuator (23) is surrounded by and connected to a sleeve (31) which encompasses the bearings (30).

6. Sanitary water valve according to claim 5, characterized in that the sleeve (31) exhibits lugs (32) which correspond to the shape of the bearings (30) and which encircle them.

7. Water valve according to one of claims 1 to 6, characterized in that in the plane of the casing lid (15) the actuator (23) exhibits a spheroidal thickening (35) which fills out the passage opening (24).

8. Water valve according to one of claims 1 to 7, characterized in that a carrier part (34), which locks the sleeve (31), is arranged in the upper dish-shaped part (33) of the casing.

9. Water valve according to one of claims 1 to 7, characterized in that the upper stationery disk (19) is sealed against the casing lid (15) by a gasket (29) which surrounds the passage opening (25) for the actuator (23).

## Revendications

1. Vanne d'eau sanitaire (10) avec un élément de commande (11), composé de trois disques de commande (16,21,19) superposés et entouré par un carter (12), les disques de commande inférieur (16) et supérieur (19) étant fixes et le disque de commande médian (21) étant susceptible d'être déplacé par rapport aux disques de commande fixes par l'intermédiaire d'un organe d'actionnement (23) agissant sur eux, où l'organe d'actionnement (23), monté basculant, respectivement pivotant dans deux plans dans le carter (12) traverse le couvercle de carter (15) et le disque de commande fixe supérieur (19), caractérisée en ce que l'organe d'actionnement (23) est monté en rotation à l'extérieur du carter (12) entourant l'élément de commande (11), de telle façon que le centre de rotation de l'organe d'actionnement (23) se situe dans le plan du couvercle de carter (15).

2. Vanne d'eau selon la revendication 1, caractérisée en ce que les points de palier de rotation (30) de l'organe d'actionnement (23) sont disposés en surplomb sur le couvercle de carter (15), des deux côtés du plan de pivotement de l'organe d'actionnement (23).

3. Vanne d'eau selon la revendication 1 ou 2, caractérisée en ce que les points de palier de rotation (30) sont réalisés sous forme de sections de sphère (30) à forme de dômes, surplombant le couvercle de carter (15).

4. Vanne d'eau selon la revendication 3, caractérisée en ce qu'un demi-cylindre (30), qui présente une ouverture pour permettre le passage de l'organe d'actionnement (23) et s'étend perpendiculairement au plan de pivotement de l'organe d'actionnement (23) et reposant par sa face de coupe sur le couvercle de carter (15), est disposé à titre de point de palier de rotation.

5. Vanne d'eau selon l'une des revendications 1 à 4, caractérisée en ce que l'organe d'actionnement (23) est entouré par une douille (31) contenant les points de palier de rotation (30) et est relié à celle-ci.

6. Vanne d'eau selon la revendication 5, caractérisée en ce que la douille (31) présente des appendices (32) correspondant à la forme des points de palier de rotation (30) et les entourant.

7. Vanne d'eau selon l'une des revendications 1 à 6, caractérisée en ce que l'organe d'actionnement (23) présente dans le plan du couvercle de carter (15) un épaississement (35) en forme de sphère, qui occupe l'ouverture de passage (24).

8. Vanne d'eau selon l'une des revendications 1 à 7, caractérisée en ce qu'une partie de maintien (34) qui fixe la douille (31) est disposée dans la partie supérieure (33) en forme de godet du carter.

9. Vanne d'eau selon l'une des revendications 1 à 7, caractérisée en ce que le disque fixe supérieur (19) est isolé de façon étanche par rapport au couvercle de carter (15) par l'intermédiaire d'une bague d'étanchéité (29) qui entoure l'ouverture de passage (25) pour l'organe d'actionnement (23).
